# EUROPÄISCHE PATENTANMELDUNG

(11) **EP 2 327 518 A2**
(43) Veröffentlichungstag der Anmeldung: **01.06.2011**
(21) Anmeldenummer: 10191403.4
(22) Anmeldetag: 16.11.2010
(51) Int. Cl.: B25F 3/00

(54) **Vorsatz für eine Werkzeugmaschine**

(30) Priorität: 26.11.2009 DE 102009057200
(71) Anmelder: C. & E. Fein GmbH, 73529 Schwäbisch Gmünd-Bargau (DE)
(72) Erfinder: Woecht, Norbert, 73560, Böbingen an der Rems (DE); Höppner, Johannes, 73540, Heubach (DE); Hokenmaier, Tobias, 73098, Rechberghausen (DE)
(74) Vertreter: Witte, Weller & Partner

(57) **Zusammenfassung**

Es wird ein Vorsatz für eine Werkzeugmaschine (10) angegeben, mit einer Antriebswelle (50), die drehfest mit einer Abtriebswelle (22) der Werkzeugmaschine (10) verbindbar ist, mit einem Aufnahmestutzen (12) an der Werkzeugmaschine (10) und einer zugeordneten Hülse (32) am Vorsatz, die auf den Aufnahmestutzen (12) aufschiebbar ist, mit einem Spannring (34), der mit Verriegelungsmitteln (16, 44) zusammenwirkt, um in einer Schließstellung eine Verriegelung der Hülse (32) auf dem Aufnahmestutzen (12) zu bewirken, wobei der Spannring (34) in Axialrichtung beweglich gehalten und in Richtung auf eine Schließstellung vorgespannt ist, und wobei die Verriegelungsmittel (16, 44) derart mit dem Spannring (34) zusammenwirken, dass eine Verriegelung in der Schließstellung beim Aufschieben des Vorsatzes (30) auf die Werkzeugmaschine (10) bis in die Schließstellung selbsttätig erfolgt, und wobei eine Freigabe des Vorsatzes (30) aus der Schließstellung durch eine Axialbewegung des Spannrings (34) entgegen seiner Vorspannung bewirkbar ist (Fig. 1).

## Beschreibung

Die Erfindung betrifft einen Vorsatz für eine Werkzeugmaschine, vorzugsweise ein Elektrowerkzeug, mit einer Antriebswelle, die drehfest mit einer Abtriebswelle der Werkzeugmaschine verbindbar ist, mit einem Aufnahmestutzen an der Werkzeugmaschine oder am Vorsatz, dem eine am jeweils anderen Teil vorgesehene Hülse zugeordnet ist, die auf den Aufnahmestutzen aufschiebbar ist, mit einem Spannring, der mit Verriegelungsmitteln zusammenwirkt, um in einer Schließstellung eine Verriegelung der Hülse auf dem Aufnahmestutzen zu bewirken.

Ein derartiger Vorsatz für eine Werkzeugmaschine ist aus der WO 2008/068100 A1 bekannt.

Bei dem bekannten Vorsatz wird eine Ringfeder oder eine Mehrzahl von Blattfedern genutzt, um den Vorsatz auf einem Aufnahmestutzen einer Werkzeugmaschine festzulegen. Zur Verriegelung dient ein Spannring, der beim Aufschieben des Vorsatzes auf die Werkzeugmaschine selbstständig einrastet, und der zum Lösen gedreht werden muss.

Der Nachteil der bekannten Anordnung besteht in einem relativ komplizierten Aufbau. Außerdem ist die Anordnung nicht für eine Einhandbedienung geeignet. Um ein Lösen von der Werkzeugmaschine zu erreichen, muss der Vorsatz mit einer Hand ergriffen werden, der Spannring gedreht werden und die Werkzeugmaschine mit der anderen Hand festgehalten werden.

Aus der EP 1 790 424 A1 ist ferner eine Werkzeugaufnahme bekannt, die mit einer Werkzeugspindel lösbar verbindbar ist, wobei eine Führungshülse mit Öffnungen für mehrere radial versetzbar in die Werkzeugspindel eingreifbare Verriegelungselemente sowie eine händisch versetzbare Verriegelungshülse vorgesehen ist, welche die Verriegelungselemente radial verriegelt. Die Verriegelungselemente sind als Kippsegmente ausgebildet, mit einem axial fest gelagerten Lagerteil sowie mit einem radial kippbar in die Öffnung der Führungshülse eindringenden Verriegelungsteil.

Hierbei dient das Verriegelungsteil gleichzeitig zur Drehmomentübertragung.

Eine derartige Werkzeugaufnahme ist zwar zur Verbindung eines Bohrkopfes mit einer Werkzeugspindel geeignet, nicht jedoch, um eine schnell lösbare Verbindung zwischen einem Vorsatz und einer Werkzeugmaschine bereitzustellen. Insbesondere ist hiermit keine Einhandbedienung ermöglicht.

Vor diesem Hintergrund liegt der Erfindung die Aufgabe zugrunde, einen Vorsatz für eine Werkzeugmaschine gemäß der eingangs genannten Art bereitzustellen, mit dem eine möglichst einfache und zuverlässige drehfeste Verbindung zur Werkzeugmaschine hergestellt werden kann, wobei eine einfache Einhandmontage und Demontage ermöglicht sein soll. Außerdem sollte möglichst erkennbar sein, ob der Vorsatz korrekt montiert ist.

Diese Aufgabe wird bei einem Vorsatz gemäß der eingangs genannten Art dadurch gelöst, dass der Spannring in Axialrichtung beweglich gehalten und in Richtung auf eine Schließstellung vorgespannt ist, wobei die Verriegelungsmittel derart mit dem Spannring zusammenwirken, dass eine Verriegelung in der Schließstellung beim Aufschieben des Vorsatzes auf die Werkzeugmaschine bis in die Schließstellung selbsttätig erfolgt, und dass eine Freigabe des Vorsatzes aus der Schließstellung durch eine Axialbewegung des Spannrings entgegen seiner Vorspannung bewirkbar ist.

Die Aufgabe der Erfindung wird auf diese Weise gelöst. Erfindungsgemäß wird nämlich durch eine Bewegung des Spannrings in Axialrichtung sowohl ein selbsttätiges Verriegeln beim Aufschieben des Vorsatzes auf die Werkzeugmaschine bis in die Schließstellung ermöglicht, als auch gleichzeitig eine Freigabe des Vorsatzes aus der Schließstellung durch eine Axialbewegung des Spannrings entgegen seiner Vorspannung.

So lässt sich der Vorsatz durch Bewegung mit einer Hand einerseits in seiner Schließstellung verriegeln und andererseits aus der Schließstellung wieder freigeben und abziehen. Ob der Vorsatz korrekt montiert ist, lässt sich gleichfalls anhand der Stellung des Spannrings ohne Weiteres erkennen. Es handelt sich somit um eine erhebliche Verbesserung gegenüber dem Stand der Technik.

In bevorzugter Weiterbildung der Erfindung umfassen die Verriegelungsmittel mindestens einen Rollkörper, vorzugsweise eine Kugel, der in eine zugeordnete Vertiefung in der Schließstellung einrastbar ist.

Auf diese Weise ergibt sich eine besonders einfache Möglichkeit zur Verriegelung und Entriegelung.

Gemäß einer weiteren Ausgestaltung der Erfindung weist der Spannring eine Führungsfläche auf, die mit dem mindestens einen Rollkörper und der Vertiefung derart zusammenwirkt, dass durch eine Axialbewegung des Spannrings eine radiale Bewegung des Rollkörpers zur Verriegelung in der Vertiefung unter Wirkung der Vorspannung bewirkbar ist und durch eine Bewegung des Spannrings entgegen seiner Vorspannung eine Entriegelung aus der Schließstellung bewirkbar ist.

Durch diese Maßnahme ergibt sich eine einfache und vorteilhafte Verriegelungsmöglichkeit und Entriegelungsmöglichkeit.

Gemäß einer weiteren Ausführung der Erfindung umfassen die Verriegelungsmittel Zentriermittel zur spielfreien Fixierung des Vorsatzes an der Werkzeugmaschine in der Schließstellung.

Auf diese Weise ist ohne zusätzliche Maßnahmen eine spielfreie Fixierung des Vorsatzes an der Werkzeugmaschine ermöglicht.

Hierzu können die Zentriermittel in Form von Schrägflächen an der Vertiefung und am Spannring ausgebildet sein, die mit dem mindestens einen Rollkörper zusammenwirken.

So lässt sich eine einfache Verriegelungs- und Entriegelungsmöglichkeit mit einer Zentrierung kombinieren.

Gemäß einem weiteren Merkmal der Erfindung ist die Vertiefung als Ringnut am Aufnahmestutzen ausgebildet.

Auf diese Weise kann durch den axial beweglichen Spannring bei Axialverschiebung bis in die Schließstellung eine automatische Verriegelung an der Ringnut auf besonders einfache Weise gewährleistet werden.

Gemäß einem weiteren Merkmal der Erfindung sind an der Werkzeugmaschine und am Vorsatz einander zugeordnete Eingriffsmittel vorgesehen, die eine Festlegung des Vorsatzes in verschiedenen Winkelpositionen auf der Werkzeugmaschine erlauben.

Vorzugsweise umfassen hierzu die Eingriffsmittel Vorsprünge oder Vertiefungen an einem Bund des Aufnahmestutzens und zugeordnete Vertiefungen oder Vorsprünge an der Hülse.

Auf diese Weise kann der Vorsatz in verschiedenen Winkelpositionen an der Werkzeugmaschine festgelegt werden, ohne dass hierzu besondere Hilfsmittel notwendig sind.

Gemäß einem weiteren Merkmal der Erfindung ist an der Hülse mindestens ein Federelement zur Sicherung des Spannrings in einer Offenstellung vorgesehen.

In zusätzlicher Weiterbildung dieser Ausführung gibt das Federelement den Spannring beim Aufschieben der Hülse auf den Aufnahmestutzen selbstständig frei.

Durch diese Maßnahmen ist eine einfache Handhabung des Spannrings ermöglicht. Insbesondere kann beim Aufschieben der Hülse auf den Aufnahmestutzen eine selbsttätige Freigabe des Spannrings erfolgen, so dass anschließend eine selbstständige Verriegelung ermöglicht ist. Auf diese Weise lässt sich eine Einhandbedienung auf einfache Weise realisieren.

Gemäß einem weiteren Merkmal der Erfindung weist das Federelement eine über eine Innenoberfläche der Hülse hervorstehende erste Zunge auf.

Durch diese Maßnahme kann eine selbsttätige Freigabe der Hülse durch Kontakt der Hülse mit dem Aufnahmestutzen beim Aufschieben der Hülse auf den Aufnahmestutzen in einfacher Weise realisiert werden.

Gemäß einer weiteren Ausführung der Erfindung ist das Federelement als Blattfeder ausgebildet, die an der Hülse verschwenkbar gelagert ist.

Obwohl grundsätzlich auch andere Ausführungen des Federelementes, z.B. als Schraubenfeder, denkbar sind, lassen sich auf diese Weise eine besonders einfache Integration des Federelementes an der Hülse und eine Sicherung gegen Herausfallen durch den übergreifenden Spannring gewährleisten.

Vorzugsweise ist an der Innenoberfläche der Hülse eine Öffnung vorgesehen, durch die die Zunge des Federelementes über die Innenoberfläche der Hülse hinaus hervorsteht.

Gemäß einer weiteren Ausführung der Erfindung steht das Federelement in der Offenstellung über eine Außenkontur der Hülse hinaus hervor und sichert den Spannring durch Anlage am Federelement in der Offenstellung.

Durch diese Maßnahmen lässt sich eine einfache Sicherung des Spannrings gegen ein zufälliges oder selbsttätiges Verschieben mit einer einfachen Entriegelungsmöglichkeit kombinieren.

Vorzugsweise ist der Spannring an der Hülse mit einer Druckfeder derart festgelegt, dass er den Spannring bei Freigabe des Federelementes durch Aufschieben der Hülse auf den Aufnahmestutzen in Richtung auf die Schließstellung vorspannt.

Auf diese Weise kann für eine Einhandbedienung sowohl eine Freigabe des Federelementes beim Aufschieben der Hülse auf den Aufnahmestutzen erreicht werden als auch eine Verriegelung der Hülse mit dem Aufnahmestutzen, wenn die Schließstellung erreicht wird.

Gemäß einer weiteren Ausführung der Erfindung ist am Aufnahmestutzen ein Bund vorgesehen, der mit der aufschiebbaren Hülse zur Zentrierung des Vorsatzes zusammenwirkt.

Auf diese Weise wird eine Zentriermöglichkeit zwischen Hülse und Bund geschaffen.

In alternativer Ausführung der Erfindung sind die einander zugeordneten Eingriffsmittel zur Zentrierung des Vorsatzes ausgebildet.

Auf diese Weise kann eine Verkürzung der Baulänge erreicht werden, da die ohnehin vorhandenen Eingriffsmittel zur Zentrierung verwendet werden. In diesem Fall kann die Hülse selbst verkürzt ausgebildet sein.

Die Aufgabe der Erfindung wird ferner durch eine Werkzeugmaschine mit einem Vorsatz gemäß einem der vorhergehenden Ansprüche gelöst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: einen Teilschnitt durch eine Werkzeugmaschine im vorderen Bereich, mit einem aufgesetzten Vorsatz, der in einer Schließstellung auf der Werkzeugmaschine verriegelt ist;
- Fig. 2: eine Darstellung der Abtriebswelle der Werkzeugmaschine in perspektivischer Ansicht;
- Fig. 3: eine perspektivische Ansicht des Vorsatzes, von der Werkzeugmaschinenseite aus gesehen;
- Fig. 4: eine vergrößerte Teilansicht auf die Hülse des Vorsatzes nach Abnahme des Spannrings, aus der eine Spannfeder sowie eine Vertiefung für die Aufnahme eines Rollelementes erkennbar ist;
- Fig.5: einen Längsschnitt durch den Vorsatz gemäß Fig. 3, wobei auf eine Darstellung der Feder zum Vorspannen des Spannrings in die Spannstellung sowie eine Darstellung des Rollkörpers verzichtet wurde;
- Fig. 6: einen vergrößerten Querschnitt durch den Vorsatz im Bereich der Spannfeder, von der Werkzeugmaschinenseite aus gesehen;
- Fig. 7: einen Querschnitt durch den Vorsatz im Bereich der Spannfeder, von der der Werkzeugmaschine abgewandten Seite aus gesehen, wobei beide einander gegenüberliegenden Zungen erkennbar sind, in der verriegelten Stellung, ohne dass der Vorsatz auf die Werkzeugmaschine aufgesetzt ist; und
- Fig. 8: einen Schnitt durch den Vorsatz gemäß Fig. 7, jedoch nach Aufsetzen auf die Werkzeugmaschine, mit gespannter Spannfeder.

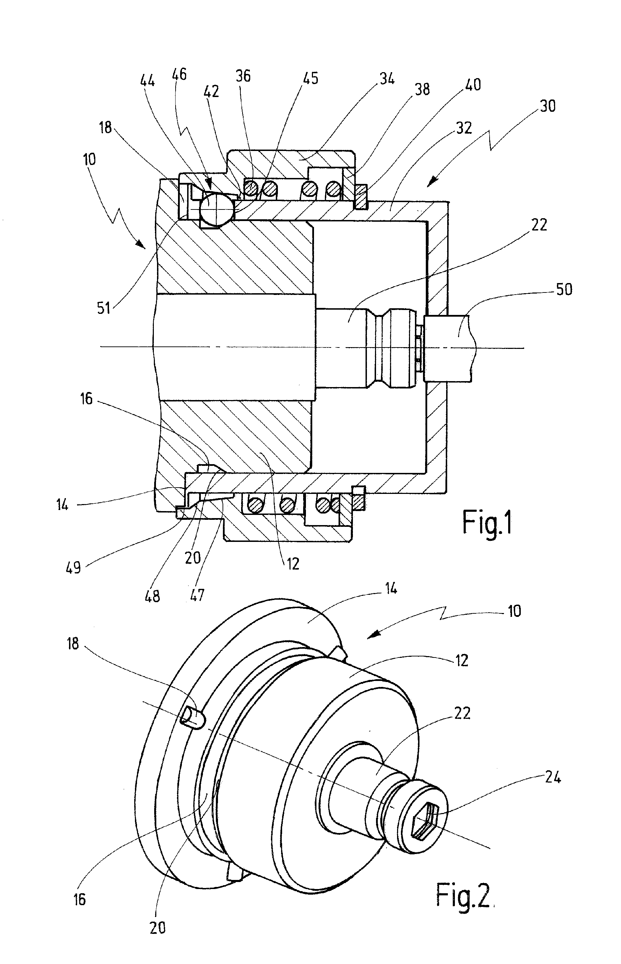

In Fig. 1 ist eine Werkzeugmaschine 10 im Bereich ihres äußeren Endes zusammen mit einem darauf aufgesetzten Vorsatz 30 vergrößert dargestellt.

Bei der Werkzeugmaschine 10 kann es sich um eine beliebige Werkzeugmaschine, vorzugsweise eine handgehaltene Werkzeugmaschine in Form eines Elektrowerkzeuges, beispielsweise einen Schrauber, eine Bohrmaschine oder dergleichen, handeln.

Bei dem Vorsatz 30 kann es sich um ein beliebiges Zubehörteil, wie etwa einen Exzentervorsatz, einen Winkelkopf oder einen anderen Vorsatz, handeln. Allen Vorsätzen 30 ist jedoch gemeinsam, dass der Vorsatz 30 eine Antriebswelle 50 aufweist, die mit einer Abtriebswelle 22 der Werkzeugmaschine 10 drehfest koppelbar ist, wobei es sich vorzugsweise um eine formschlüssige Verbindung handelt. Aus Gründen der Übersichtlichkeit wurden vom Vorsatz 30 außer der Antriebswelle 50 in den Figuren nur die Teile dargestellt, die zur Verbindung mit der Werkzeugmaschine 10 notwendig sind. Nicht dargestellt sind weitere Funktionsteile des Vorsatzes, die grundsätzlich bekannt sind und nicht zur Erfindung gehören, wie z.B. ein Winkelgetriebe oder dergleichen.

Die Form der Werkzeugmaschine 10 im Bereich der Abtriebswelle 22 ist aus Fig. 2 näher ersichtlich.

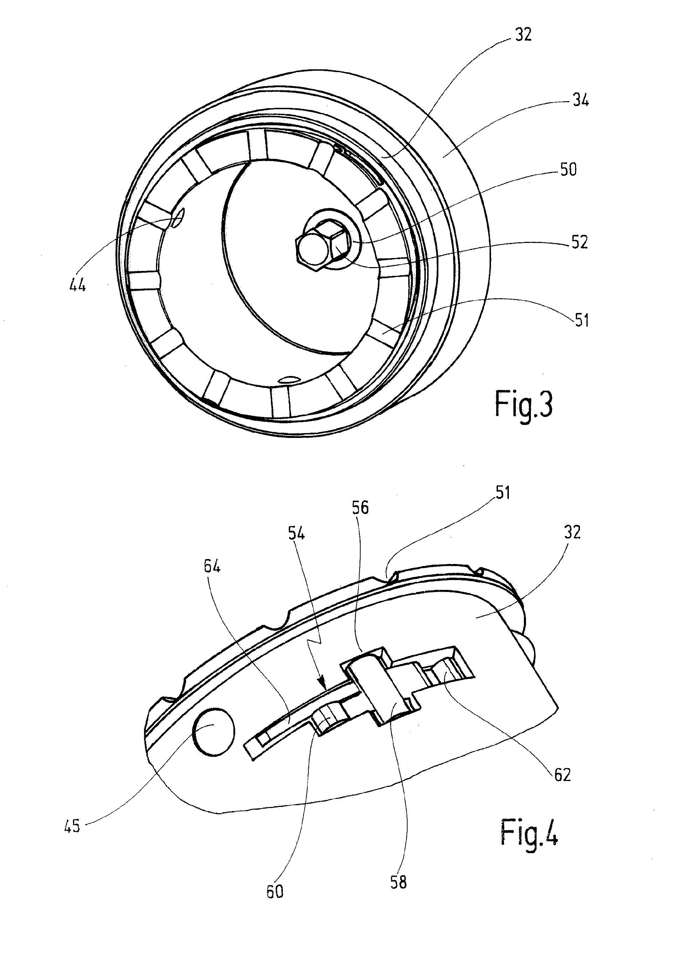

Die Werkzeugmaschine 10 weist eine zylindrische Abtriebswelle 22 mit einem Formschlusselement 24 in Form einer sechskantförmigen Vertiefung auf. Zur Verbindung der Werkzeugmaschine 10 mit dem Vorsatz 30 ist ein grundsätzlich zylindrischer Aufnahmestutzen 12 vorgesehen, der werkzeugmaschinenseitig durch einen Bund 14 verbreitert ist. Auf der radial vom Aufnahmestutzen 12 abstehenden Fläche des Bundes 14 sind ferner mehrere Eingriffselemente 18 in Form von halbzylindrischen Stegen vorgesehen, die in gleichmäßigen Winkelabständen zueinander angeordnet sind. Im vorliegenden Fall sind drei Stege in Winkelabständen von 120° zueinander am Bund 14 angeordnet. Diesen Stegen sind entsprechende Eingriffsmittel 51 in Form von entsprechend geformten Vertiefungen am Vorsatz 30 zugeordnet, wodurch der Vorsatz 30 in seiner Winkellage relativ zur Werkzeugmaschine 10 fixierbar ist (vgl. Fig. 3). Da am Vorsatz 30 insgesamt zwölf solcher Eingriffsmittel 51 in Form von Vertiefungen in gleichmäßigen Winkelabständen zueinander vorgesehen sind, kann der Vorsatz 30 in beliebigen Winkellagen relativ zur Werkzeugmaschine 10 montiert werden, wobei die Relativlage in Abständen von jeweils 30° veränderbar ist.

Auf dem Aufnahmestutzen 12 ist ferner eine Vertiefung 16 in Form einer umlaufenden Ringnut vorgesehen, die zur Aufnahme eines Arretiermittels, im vorliegenden Fall in Form eines Rollkörpers, nämlich einer Kugel, ausgebildet ist.

Der Vorsatz 30 weist eine topfförmige Hülse 32 auf, die auf den Aufnahmestutzen 12 aufschiebbar ist und mit Hilfe eines federbelasteten Spannrings 34 sowie allgemein mit 16, 44 bezeichneten Verriegelungsmitteln in einer Schließstellung an der Werkzeugmaschine 10 sicher festlegbar ist. Die zuvor erwähnten Vertiefungen 51, die den Stegen 18 am Bund 14 des Aufnahmestutzens 12 zugeordnet sind, sind am stirnseitigen Ende der Hülse 32 ausgebildet, die gleichfalls durch einen Bund etwas radial nach außen erweitert ist. Die Vertiefungen 51 der Hülse 32 liegen somit in der Schließstellung gemäß Fig. 1 an den drei zugeordneten Stegen 18 am Bund 14 an, so dass gleichzeitig auch die Zentrierung hierüber gewährleistet werden kann, soweit dies nicht bereits über die Anlage der Stirnfläche der Hülse 32 am Bund 14 erfolgt.

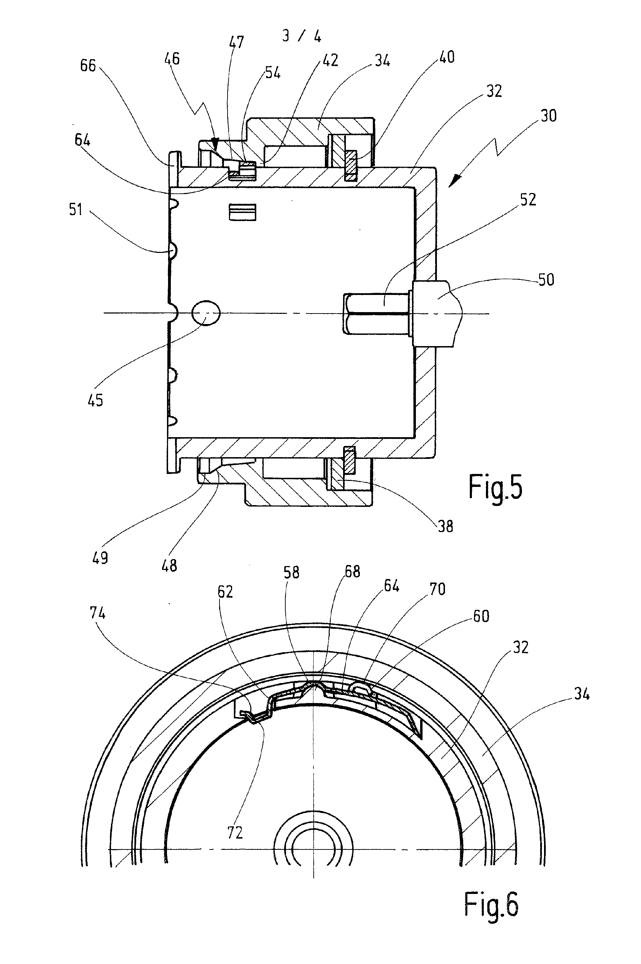

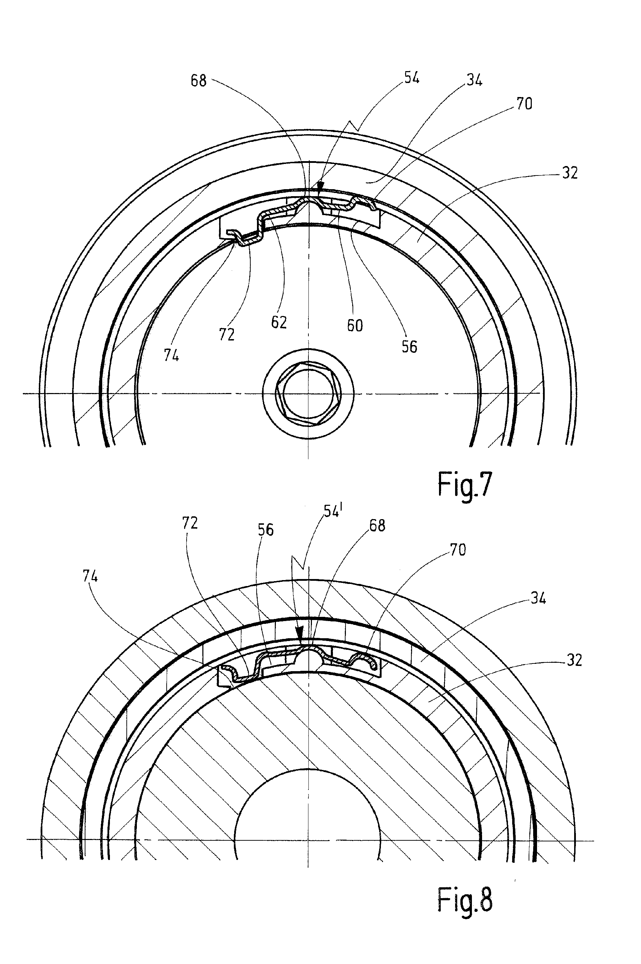

Auf der Hülse 32 des Vorsatzes 30 ist der Spannring 34 axial beweglich festgelegt und durch eine Druckfeder in Form einer Schraubenfeder 36 in Richtung auf die Werkzeugmaschine 10 vorgespannt. Die Druckfeder 36 ist in einer Ausnehmung des Spannrings 34 aufgenommen und zur Außenseite hin (d.h. der Werkzeugmaschine 10 abgewandten Seite hin) durch eine Scheibe 38 begrenzt, die mittels eines Sicherungsrings 40 an der Hülse 32 festgelegt ist. Zur Innenseite hin liegt die Druckfeder 36 an einem Innenbund 42 des Spannrings 34 an, so dass sich eine Vorspannung zur Innenseite hin, d.h. in Richtung auf die Werkzeugmaschine 10, ergibt. Eine Bewegung des Spannrings 34 in Richtung auf die Werkzeugmaschine 10 ist durch den Rollkörper 44 in Form einer Kugel begrenzt, der in einer Ausnehmung 45 in der Wandfläche der Hülse 32 durch eine Führungsfläche 46 am Spannring 34 radial beweglich gehalten ist. Ein Herausfallen des Rollkörpers 46 zur Innenseite hin ist durch einen etwas verringerten Durchmesser der Ausnehmung 45 verhindert. Ein Herausfallen des Rollkörpers 46 nach außen hin ist durch den übergreifenden Spannring 34 und die Anlage der zugeordneten Führungsfläche 46 verhindert. Zusätzlich ist zwischen dem Spannring 34 und der Hülse 32 ein Federelement 54 in einer entsprechend geformten Ausnehmung oder Vertiefung 56 der Hülse 32 vorgesehen. Das Federelement 54, dessen Form aus Fig. 4 näher ersichtlich ist, ist als Blattfeder ausgebildet, mit einem Mittelteil 58, von dem aus ein erster Schenkel 60 zur einen Seite hin und ein zweiter Schenkel 62 zur gegenüberliegenden Seite hin absteht. Parallel zu dem ersten und zweiten Schenkel 60, 62 greift am Mittelteil 58 ein dritter Schenkel 64 an, der einer Festlegung des Federelementes 54 in der zugeordneten Vertiefung 56 der Hülse 32 dient. Das Federelement 54 kann sich um sein Mittelteil 58 mit dem ersten Schenkel 60 und dem zweiten Schenkel 62 verschwenken, so dass eine jeweils zugeordnete Zunge am äußeren Ende, nämlich eine erste Zunge 70 am ersten Schenkel 60 und eine zweite Zunge 72 am zweiten Schenkel 62, jeweils nach außen hin bzw. innen hin über die Kontur der Hülse 32 hinaus hervorsteht (Fig. 6, 7).

In Fig. 6 ist erkennbar, wie die zweite Zunge 72 durch eine Öffnung 74 in der Innenoberfläche der Hülse 32 hinaus hervorsteht. In dieser Position steht gleichzeitig die erste Zunge 70 über die Außenkontur der Hülse 32 hinaus nach außen hervor, so dass der Bund 42, an dem die Druckfeder 36 anliegt, durch das Federelement 54 blockiert ist. Folglich ist der Spannring 34 in dieser Stellung durch das Federelement 54, das sich in seiner entspannten Lage befindet, arretiert. Diese Position ist auch in Fig. 7 dargestellt, wobei der Schnittverlauf jedoch unmittelbar durch den ersten und zweiten Schenkel 60, 62 führt.

Wird nun der Vorsatz 30 mit seiner Hülse 32 auf den Aufnahmestutzen 12 aufgeschoben, so wird die zweite Zunge 72 des Federelementes 54 selbsttätig durch die Öffnung 74 nach außen gedrückt, so dass die erste Zunge 70 den Bund 42 des Spannrings 34 freigibt, so dass sich der Spannring 34 unter Wirkung der Druckfeder 36 weiter in Richtung auf den Bund 14 am Aufnahmestutzen 12 bewegen kann. Durch diese Bewegung wird der Rollkörper 44 durch die entsprechend geformte Führungsfläche 46 an der Innenoberfläche des Spannrings 34 radial nach innen beaufschlagt. Die Führungsfläche 46 weist einen ersten Abschnitt in Form einer ersten Schrägfläche 47 mit geringer Neigung (unterhalb von 10°) gegenüber der Axialrichtung auf, woran sich eine zweite Schrägfläche 48 mit stärkerer Neigung (ca. 30°-40°) und schließlich ein dritter Abschnitt in Form einer hohlzylindrischen Fläche 49 anschließt.

Wird nun der Vorsatz 30 derart mit seiner Hülse 32 auf den Aufnahmestutzen 12 aufgesetzt, dass zunächst das Formschlussgegenelement 52 an der Antriebswelle 50 in das Formschlusselement 24 der Antriebswelle 22 eingreift, und dann so weit auf den Aufnahmestutzen 12 aufgeschoben, dass das Federelement 54 entriegelt wird (vgl. Fig. 8), so wird der Rollkörper 44 durch die erste Schrägfläche 47 des Spannrings 34 in Richtung auf die Öffnung 45 radial beaufschlagt. Bei Erreichen der Endposition gelangt dann der Rollkörper 44 in die in Fig. 1 dargestellte Stellung, so dass der Rollkörper 44 an der ringförmigen Vertiefung des Aufnahmestutzens 12 einrastet. In dieser Stellung schließt der Spannring 34 nahezu mit dem Bund 14 am Aufnahmestutzen 12 ab, so dass auch optisch ohne Weiteres ersichtlich ist, dass eine Verriegelung des Vorsatzes 30 mit der Werkzeugmaschine 10 gewährleistet ist. In dieser Position ist der Rollkörper 44 durch die Schrägfläche 47 am Spannring 34 einerseits und durch eine weitere zugeordnete Schrägfläche 20 an der ringförmigen Vertiefung 16 des Aufnahmestutzens 12 andererseits spielfrei gehalten.

Es versteht sich, dass anstelle nur eines einzigen Rollkörpers 44 und nur einer einzigen Spannfeder 54 auch mehrere Rollkörper 44 bzw. mehrere Spannfedern 54 vorgesehen sein können, etwa um einem Verkanten entgegenzuwirken.

Soll der Vorsatz 30 wieder von der Werkzeugmaschine 10 gelöst werden, so muss lediglich der Spannring 34 entgegen der Wirkung der Druckfeder 36 nach außen gezogen werden. Dadurch wird der Rollkörper 44 freigegeben, so dass dieser aus der Ringnut 16 heraus in den Bereich der zweiten Schrägfläche 48 des Spannrings 34 gelangt und zwischen der zweiten Schrägfläche 48, der zylindrischen Fläche 49 und der Außenoberfläche des Aufnahmestutzens 12 gehalten ist. Dabei gelangt das Federelement 54 wieder in seine entspannte Lage, in der der Spannring 34 durch die Zunge 70 des Federelementes 54 verriegelt wird (vgl. Fig. 6, 7).

Mit dem erfindungsgemäßen Vorsatz 30 ergibt sich eine besonders einfache Befestigung des Vorsatzes 30 auf der Werkzeugmaschine 10. Hierzu muss der Vorsatz 30 lediglich mit seinem Formschlussgegenelement 52 am Formschlusselement 24 der Abtriebswelle 22 angesetzt werden und dann mit seiner Hülse 32 auf den Aufnahmestutzen 12 aufgeschoben werden, bis der Spannring 34 freigegeben wird und nach Aufschieben bis in die Endposition, in der die Vertiefungen 51 an den Stegen 18 zur Anlage kommen, selbstständig durch Einrasten des Rollkörpers 44 in der Ringnut 16 verriegelt wird.

## Patentansprüche

1. Vorsatz für eine Werkzeugmaschine (10), vorzugsweise ein Elektrowerkzeug, mit einer Antriebswelle (50), die drehfest mit einer Abtriebswelle (22) der Werkzeugmaschine (10) verbindbar ist, mit einem Aufnahmestutzen (12) an der Werkzeugmaschine (10) oder am Vorsatz (30), dem eine am jeweils anderen Teil vorgesehene Hülse (32) zugeordnet ist, die auf den Aufnahmestutzen (12) aufschiebbar ist, mit einem Spannring (34), der mit Verriegelungsmitteln (16, 44) zusammenwirkt, um in einer Schließstellung eine Verriegelung der Hülse (32) auf dem Aufnahmestutzen (12) zu bewirken, **dadurch gekennzeichnet, dass** der Spannring (34) in Axialrichtung beweglich gehalten und in Richtung auf eine Schließstellung vorgespannt ist, und dass die Verriegelungsmittel (16, 44) derart mit dem Spannring (34) zusammenwirken, dass eine Verriegelung in der Schließstellung beim Aufschieben des Vorsatzes (30) auf die Werkzeugmaschine (10) bis in die Schließstellung selbsttätig erfolgt, und dass eine Freigabe des Vorsatzes (30) aus der Schließstellung durch eine Axialbewegung des Spannrings (34) entgegen seiner Vorspannung bewirkbar ist.

2. Vorsatz nach Anspruch 1, **dadurch gekennzeichnet, dass** die Verriegelungsmittel mindestens einen Rollkörper (44), vorzugsweise eine Kugel, umfassen, der in eine zugeordnete Vertiefung (16) in der Schließstellung einrastbar ist.

3. Vorsatz nach Anspruch 2, **dadurch gekennzeichnet, dass** der Spannring (34) eine Führungsfläche (46) aufweist, die mit dem mindestens einen Rollkörper (44) und der Vertiefung (16) derart zusammenwirkt, dass durch eine Axialbewegung des Spannrings (34) eine radiale Bewegung des Rollkörpers (44) zur Verriegelung in der Vertiefung (16) unter Wirkung der Vorspannung bewirkbar ist und durch eine Bewegung des Spannrings (34) entgegen seiner Vorspannung eine Entriegelung aus der Schließstellung bewirkbar ist.

4. Vorsatz nach einem der vorhergehenden Ansprüche, **dadurch gekennzeichnet, dass** die Verriegelungsmittel (16, 44) Zentriermittel zur spielfreien Fixierung des Vorsatzes (30) an der Werkzeugmaschine (10) in der Schließstellung umfassen, und dass die Zentriermittel vorzugsweise in Form von Schrägflächen (20, 47) an der Vertiefung (16) und am Spannring (34) ausgebildet sind, die mit dem mindestens einen Rollkörper (44) zusammenwirken.

5. Vorsatz nach einem der vorhergehenden Ansprüche, **dadurch gekennzeichnet, dass** die Vertiefung (16) als Ringnut am Aufnahmestutzen (12) ausgebildet ist.

6. Vorsatz nach einem der vorhergehenden Ansprüche, **dadurch gekennzeichnet, dass** an der Werkzeugmaschine (10) und am Vorsatz (30) einander zugeordnete Eingriffsmittel (18, 51) vorgesehen sind, die eine Festlegung des Vorsatzes (30) in verschiedenen Winkelpositionen auf der Werkzeugmaschine (10) erlauben, und dass die Eingriffsmittel (18, 51) vorzugsweise Vorsprünge (18) oder Vertiefungen an einem Bund (14) des Aufnahmestutzens (12) und zugeordnete Vertiefungen (51) oder Vorsprünge an der Hülse (32) umfassen.

7. Vorsatz nach einem der vorhergehenden Ansprüche, **dadurch gekennzeichnet, dass** an der Hülse (32) mindestens ein Federelement (54) zur Sicherung des Spannrings (34) in einer Offenstellung vorgesehen ist, und dass vorzugsweise das Federlement (54) den Spannring (34) beim Aufschieben der Hülse (32) auf den Aufnahmestutzen (12) selbsttätig freigibt.

8. Vorsatz nach Anspruch 7, **dadurch gekennzeichnet, dass** das Federelement (54) eine über eine Innenoberfläche der Hülse (32) hervorstehende erste Zunge (72) aufweist.

9. Vorsatz nach Anspruch 7 oder 8, **dadurch gekennzeichnet, dass** das Federelement (54) als Blattfeder ausgebildet ist, die an der Hülse (32) verschwenkbar gelagert ist.

10. Vorsatz nach Anspruch 8 oder 9, **dadurch gekennzeichnet, dass** an einer Innenoberfläche der Hülse (32) eine Öffnung (74) vorgesehen ist, durch die die erste Zunge (72) des Federelementes (54) über die Innenoberfläche der Hülse (32) hinaus hervorsteht.

11. Vorsatz nach einem der Ansprüche 8 bis 10, **dadurch gekennzeichnet, dass** das Federelement (54) in der Offenstellung über eine Außenkontur der Hülse (32) hinaus hervorsteht und den Spannring (34) durch Anlage am Federelement (54) in der Offenstellung sichert.

12. Vorsatz nach einem der Ansprüche 8 bis 11, **dadurch gekennzeichnet, dass** der Spannring (34) an der Hülse (32) mittels einer Druckfeder (36) derart festgelegt ist, dass er den Spannring (34) bei Freigabe des Federelementes (54) durch Aufschieben der Hülse (32) auf den Aufnahmestutzen (12) in Richtung auf die Schließstellung vorspannt.

13. Vorsatz nach einem der vorhergehenden Ansprüche, **dadurch gekennzeichnet, dass** am Aufnahmestutzen (12) ein Bund (14) vorgesehen ist, der mit der aufschiebbaren Hülse (32) zur Zentrierung des Vorsatzes (30) zusammenwirkt.

14. Vorsatz nach einem der Ansprüche 6 bis 13, **dadurch gekennzeichnet, dass** die einander zugeordneten Eingriffsmittel (18, 51) zur Zentrierung des Vorsatzes (30) ausgebildet sind.

15. Werkzeugmaschine mit einem Vorsatz (30) nach einem der vorhergehenden Ansprüche.
